# EUROPEAN PATENT APPLICATION

(11) **EP 1 096 627 A1**
(43) Date of publication of application: **02.05.2001**
(21) Application number: 00123513.4
(22) Date of filing: 27.10.2000
(51) Int. Cl.: H02B 11/127

(54) **Coupling system**

(30) Priority: 28.10.1999 VE 219699
(71) Applicant: Burguera, Elio C., Caracas (VE)
(72) Inventor: Burguera, Elio C., Avenida Francisco Solano Caracas (VE); Alcantara, Francisco, Avenida Francisco Solano Caracas (VE); Mejias, Oswaldo, Avenida Francisco Solano Caracas (VE)
(74) Representative: Ungria Lopez, Javier

(57) **Abstract**

The present invention relates to a method and to the system to implement said method, for the modular connection of electrical, devices to electrical distribution systems. The system of coupling according to the present invention permits the connecting of an electrical device through a system of levers and guides in three or more stages. The first stage consists in situating the electrical device at the height corresponding to the connection thereof to the electrical distribution system without the pertinent connection to the electrical distribution system. The subsequent stages correspond to the connection of the output and control cables of the electrical device. The final stage consists in connecting the electrical connections of the electrical device to the electrical distribution bus bars.

## Description

The present invention relates to a method and to a system for implementing said method, for modular connection of electrical devices to electrical distribution systems, more specifically to the connection of protective elements between electrical distribution systems and electrical devices to be powered by said electrical distribution systems.

Electrical distribution systems generally comprise three conductive bus bars arranged in parallel with each other, to which are connected the electrical devices. The connection is achieved through electrical connectors mounted on the rear part of said electrical devices. The difficulties are well known which usually arise during the connection process of the electrical connecting devices. Said difficulties are mainly due to the difficult task involved in coupling the electrical connectors of said devices to the power bus bars since said electrical connectors are located on the rear part of said electrical devices making impossible free access on the part of the distribution system operator to the sectors close to the connection means. The consequence of this is that the task of connecting electrical distribution devices is very complicated and implies a considerable loss of time for the operators. In addition the risks are increased of damaging the electrical connections, which are generally made from delicate materials, and even of wrongly connecting the pertinent device which in the worst of cases can imply the destruction thereof and/or of the electrical distribution system to which the electrical device shall be connected.

One of the solutions commonly employed is to use guidance systems which carry the electrical device to be connected to the electrical distribution bus bars so that the electrical connectors are positioned facing said bus bars and can be fitted correctly and without difficulty onto these. Preferentially the guidance system comprises two plates situated at a distance which permits the electrical device to be situated between said plates and be slid in a direction parallel to these until the pertinent electrical connectors come into direct contact with said electrical distribution bus bars. Nonetheless the difficulties are well known that said guidance systems present, due to the lack of precision in the guidance system or else due to the difficulty involved in applying similar forces on both sides of the device resulting in that said device cannot slide easily between said plates and consequently preventing the subsequent sliding of the electrical device up to the electrical distribution bus bars. Consequently, there is a need for an improved coupling system which permits the straightforward and correct connection of electrical devices to the electrical distribution bus bars.

In addition, in many cases there exists the need for the connection to be made in various stages in order to perform specific operations or functions, such as the test position in for example medium voltage circuit breakers. There are mechanisms for achieving these connection systems in one or various stages but they are generally complex and costly for which reason they are only employed in expensive, high voltage equipment.

A first object of the present invention is to provide a system for coupling electrical devices to electrical distribution bus bars which permits a straightforward and correct connection of said electrical devices to the electrical distribution bus bars.

A further object of the present invention is to provide a system for coupling electrical devices to electrical distribution bus bars which permits the connection of the device to be made in two or more stages, in a simple, safe and economical manner.

The present invention relates to a method and to a system for implementing said method for the connection of electrical devices, more specifically protective elements to be connected between the electrical distribution systems and the electrical devices to be powered by said electrical distribution systems. It is preferred that the installation of protective elements be implemented in two or more stages. The first stage corresponds to the test position in which the protective element is connected, through second means of protection to the output and control cables which in turn are connected to the electrical device to be powered by the electrical distribution system. The final stage corresponds to the connection of the electrical device to the electrical distribution system through first means of connection. The method according to the present invention comprises the first step of displacing longitudinally said second means of electrical connection through a first circular movement and a second step which comprises displacing longitudinally the first means of electrical connection through a second circular movement and maintaining the second means of electrical connection fixed.

### BRIEF DESCRIPTION OF THE DRAWINGS

So as to further illustrate the invention, it will be described hereinafter on the grounds of attached drawings in which
FIGURE 1, is a view in perspective of an electrical distribution system which has attached thereto the system of coupling according to the present invention.

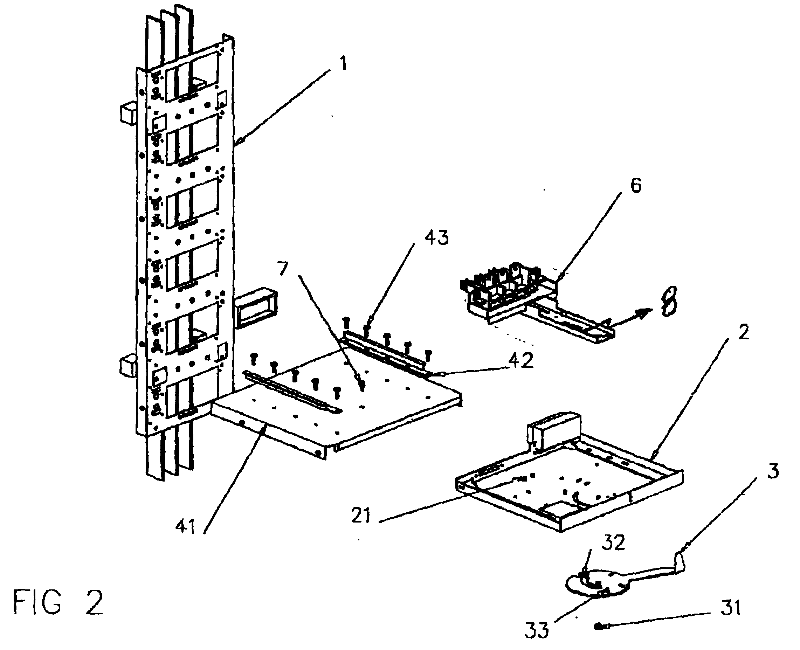

FIGURE 2, is a view in perspective of the parts which constitute the system of coupling according to the present invention.
FIGURE 3, is a view in perspective of the system of coupling coupled to the electrical distribution system.
FIGURE 3a, is a top view of the lever system which forms part of the system of coupling according to the present invention.
FIGURE 4, is a view in perspective of the system of coupling coupled in the first stage of the coupling process of electrical devices according to the present invention.
FIGURE 4a, is a top view of the system of coupling coupled in the first stage of the coupling process of electrical devices according to the present invention.

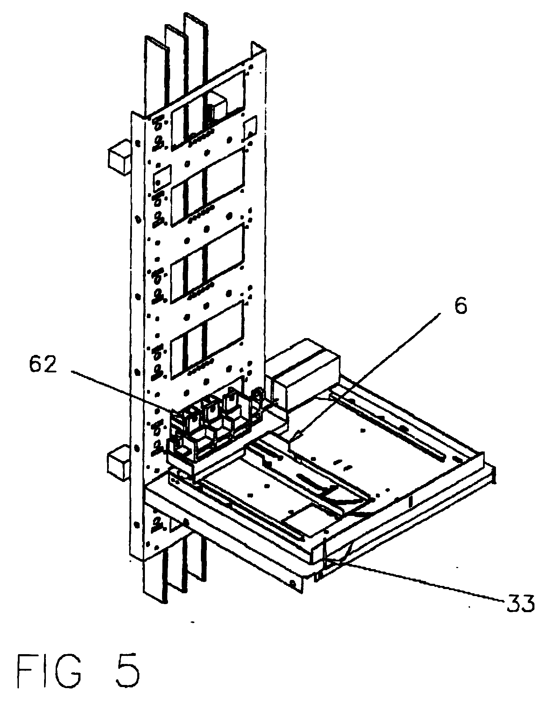

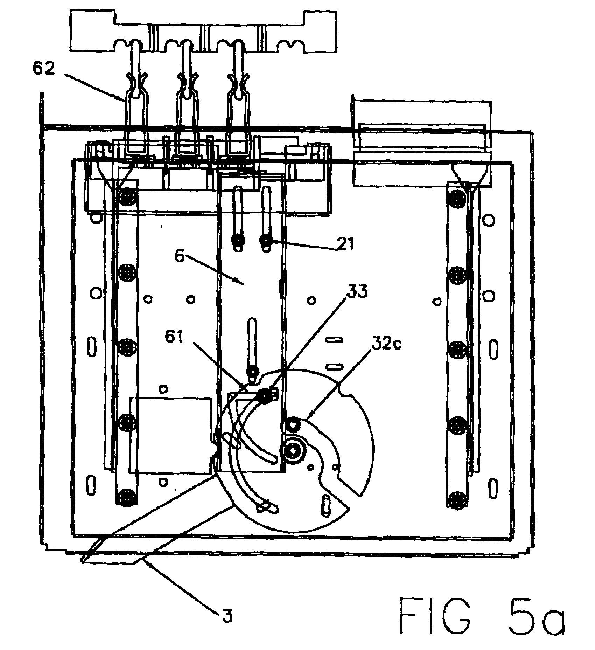

FIGURE 5, is a view in perspective of the system of coupling coupled in the final stage of the coupling process of electrical devices according to the present invention.
FIGURE 5a, is a top view of the system of coupling coupled in the final stage of the coupling process of electrical devices according to the present invention.

### DETAILED DESCRIPTION OF THE INVENTION

The system of coupling to implement the present invention is made up of the following elements:

First means of electrical connection which comprises a system of guides in which the same consists of a plate connected at its front end to said means of electrical connection and in which said plate has slots parallel to the direction of sliding the electrical device to be connected and a slot perpendicular to said direction, where said perpendicular slot has an extension which forms a half of a semicircle which runs from one end of the perpendicular slot to the rear end of said plate. The first means of electrical connection preferentially comprises connection elements which are press-fitted to the electrical distribution bus bars such as power clamp type connections (62).

A removable tray (2) which holds the electrical devices, preferentially protective elements, to be connected between an electrical distribution system and an electrical device which shall be powered by said electrical distribution system. The tray comprises a series of guide pins (21) which permit the first means of electrical connection (6) to slide. The removable tray generally has around its perimeter a rim (2) and a quantity of guide pins that is equal to the quantity of parallel slots in the plate of the guide system described above and in which said guide pins are introduced into said parallel slots when the electrical connection system is attached on top of the removable tray. In addition, said removable tray comprises a slot in the form of a semicircle through which runs a bearing pin attached to a lever means in such a manner that said bearing pin is positioned inside the perpendicular slot of said plate making it possible for said bearing pin to be displaced over the length of the perpendicular slot and its extension in form of half a semicircle.

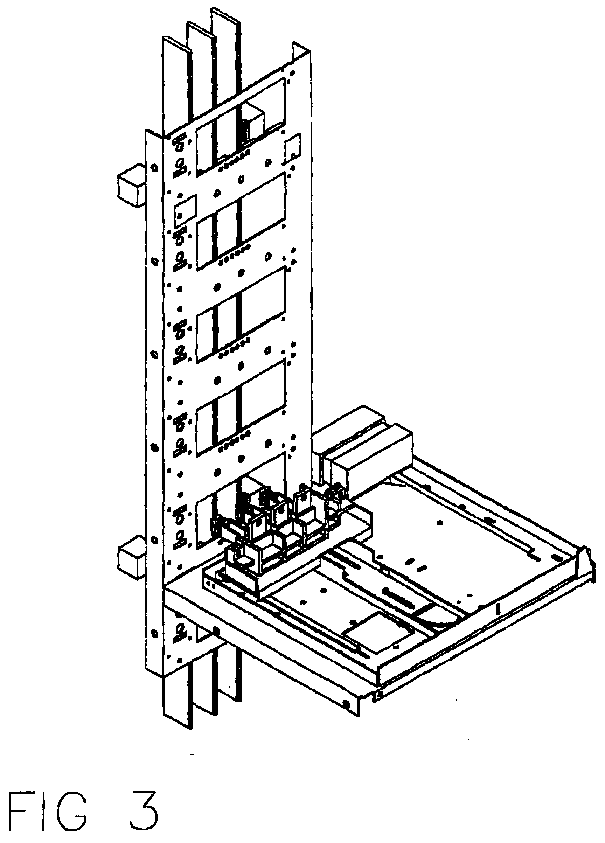

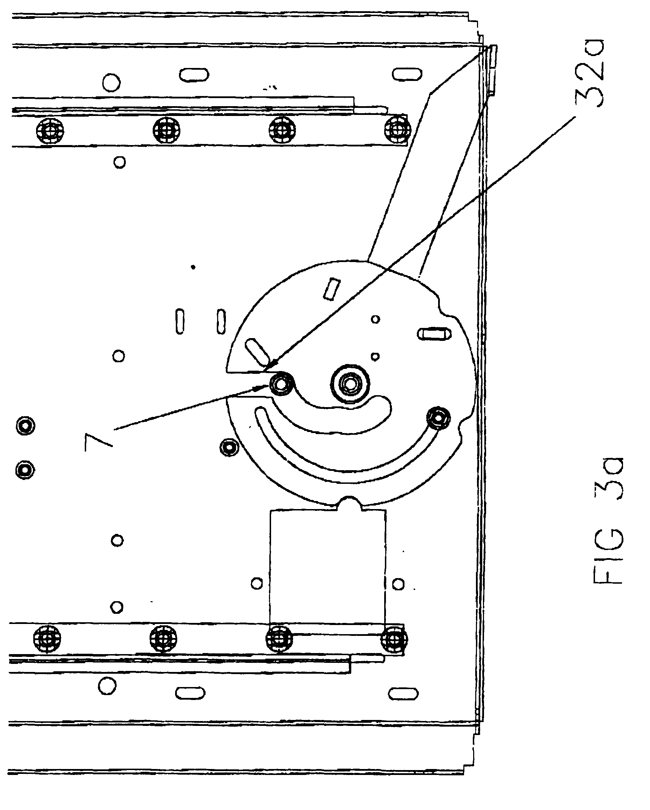

A lever means (3) which is fastened to the removable tray through a pivot (31) in which said lever means has a slot (32) which permits a guide pin (7) to slide around the edges of said slot. A bearing pin (33) is attached to said lever means and makes possible the sliding of the first means of electrical connection over the first system of guides. The guide pin is attached to a supporting frame (41) which extends from the electrical distribution system and has the purpose of retaining the electrical device in position. The lever means comprises a disc and a handle where the handle is connected to the disc on one of its edges and where the disc has a bearing pin close to its circumference and perpendicular to its top surface. Additionally, the disc has a curve-shaped slot which substantially surrounds the pivot which maintains the lever means fixed to the underside of the removable tray. The curve-shaped slot has an opening which permits the insertion of the guide pin (7) so that the latter can slide around the edges of the said curve-shaped slot. In addition to said curve-shaped slot having irregularities, preferentially in the form of grooves in which said guide pin can rest making it possible for the removable tray to be held fixed in each of the pertinent stages of the connection process of the electrical device. In addition, the disc of the lever means comprises on its edges, grooves arranged at a distance from each other such that they permit the fixing of the lever means in each one of said stages thanks to a protuberance which is situated within said grooves and where said protuberance forms part of the underside of the removable tray. The protuberance can consist either of a pin which runs from the underside of the removable tray downwards or it can project from an element, for example of polygonal shape, which projects from the underside of the removable tray as can be seen in figure 3a.

One or more second means of electrical connection (5a) attached to the removable tray.

A supporting frame (41) of the electrical device to be connected. The supporting frame is preferentially fastened at a right angle to the electrical distribution system and comprises on its upper side a guide system which permits the removable tray to slide. The separation between each guide is substantially equal to the width of the removable tray.

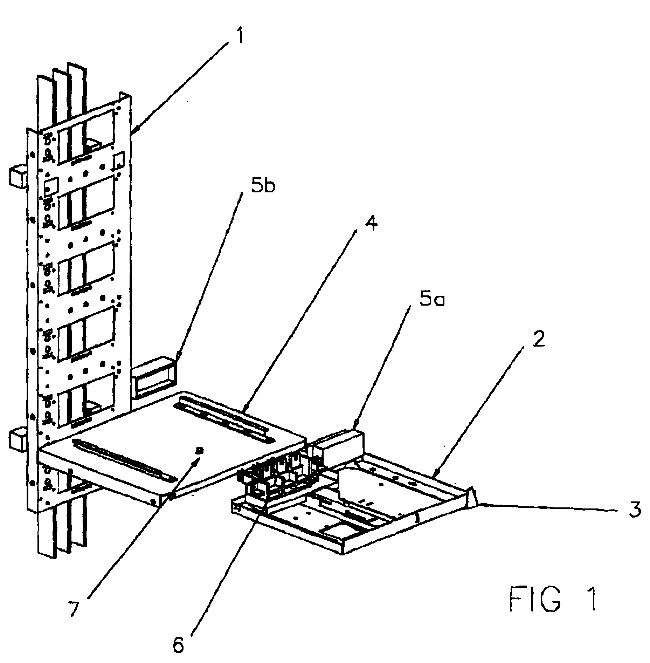

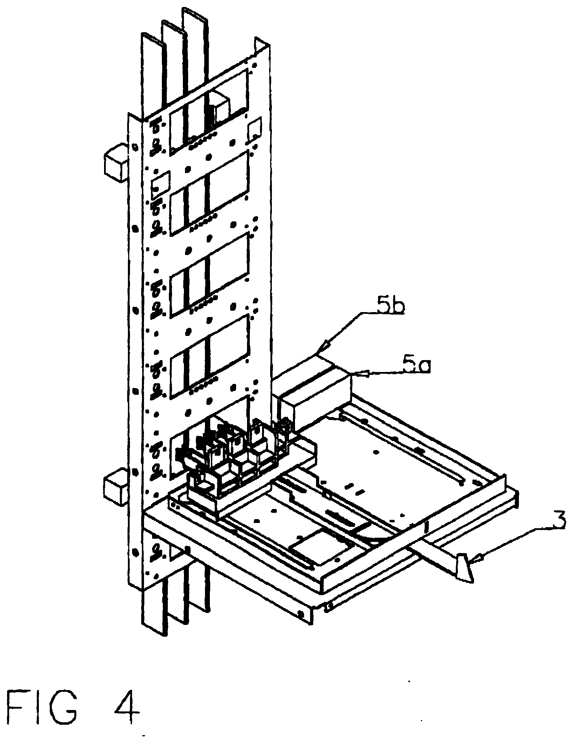

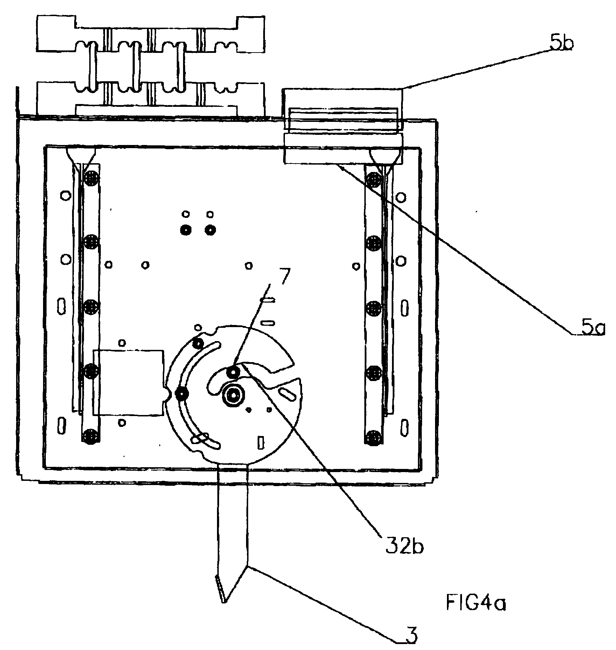

The process of electrically connecting the electrical device is as follows. The electrical device is situated on the removable tray which is placed in the supporting frame, by inserting it into the guide system (4) and with the lever means in the initial position (see Fig. 1). The guide pin (7) is inserted in the irregular slot (32a) thanks to the force applied against the electrical device when pushing the latter against the electrical distribution system. The first irregularity of said curve-shaped slot impedes the subsequent sliding of the electrical device. In this position the electrical device is disconnected and held by the supporting means. The longitudinal sliding of the removable tray is possible thanks to a first circular movement of the lever means to a second position which is that in which the guide pin (7) is situated in the following irregularity of the curve-shaped slot (see Figure 4 and 4a). This movement permits the connection of the second means of electrical connection (5a and 5b). The ensuing action of turning the lever means permits the electrical device to be slid into other positions and finally into the final position in which the guide pin (7) is prevented from moving since the extremity of the irregular slot makes it impossible for the removable tray to be slid into another position. The first means of connection is connected to the distribution bus bars through a longitudinal movement since the bearing pin (33) is situated inside the perpendicular slot of plate (8) and pushes the first electrical connection system against the electrical distribution bus bars when the lever means is taken to the end position by means of a second circular movement.

It is not deemed necessary to extend this description further in order that an expert in the matter comprehend the scope of the invention and the benefits stemming therefrom.

The materials, form, size and disposition of the elements shall be capable of variation provided that this does not imply an alteration to the essential nature of the invention.

The terms in which this specification has been written are to be taken in their broadest sense and not restrictively.

## Claims

1. A coupling system which comprises:
a means of guidance which has a plurality of slots in parallel with a sliding direction of said means of guidance and a slot perpendicular to said sliding direction, in which said perpendicular slot has an extension which forms one half of a semicircle which runs from the perpendicular slot at a right angle and in the opposite direction to the parallel slots,
a modular surface which has a slot of semicircular shape, a protuberance and a plurality of guide pins equal in number to the quantity of parallel slots of said means of guidance, where said guide pins are arranged in such a manner that said guide pins are introduced into said parallel slots when the means of guidance is situated over said modular surface,
a lever means which comprises a disc and a handle where the handle is connected to the disc in a first sector of the perimeter of the disc and where the disc has in a second sector of the disc, opposite to said first sector, a curve-shaped slot which partially surrounds the pivot that maintains the lever means fixed to the underside of the modular surface, a bearing pin perpendicular to upper side of the disc, and grooves located on the rims of the disc,
said system of coupling being characterised in that,
the means of guidance is situated on the modular surface in such a manner that the guide pins of said modular surface are introduced into the parallel slots of said guidance means and the bearing pin of the lever means runs through the semicircular slot of the modular surface and said bearing pin is introduced into the extension in the form of half a semicircle of the perpendicular slot of said means of guidance.

2. The coupling system of claim 1, wherein said system of coupling is positioned on a supporting element which has second means of guidance for the modular surface and a second bearing pin which is introduced into the curve-shaped slot of said lever means.

3. The coupling system of claim 2, wherein the second means of guidance comprise two parallel plates separated by a distance equal to the width of the modular surface.

4. The coupling system of claim 3, wherein the second bearing pin is located between the two parallel plates.

5. The coupling system of claim 1, wherein the means of guidance has attached, at the end which has the parallel slots, a first means of electrical connection.

6. The coupling system of claim 5, wherein the first means of electrical connection consists of power clamps.

7. The coupling system of claim 1, wherein second means of electrical connection is attached to the modular surface.

8. The coupling system of claim 1, wherein the protuberance of the modular surface is a pin which projects from the underside of said modular surface.

9. The coupling system of claim 1, wherein the protuberance is a protuberance which projects from an element of polygonal shape which projects from the underside of said modular surface.

10. A guide which comprises a plate which has slots in parallel with the sliding direction of said guide and a slot perpendicular to said direction, in which said perpendicular slot has an extension which forms a slot in the shape of one half of a semicircle which runs from the perpendicular slot at a right angle with respect to said perpendicular slot and in the opposite direction to the parallel slots.

11. A lever which comprises a disc and a handle where the handle is connected to the disc in a first sector of the perimeter of the disc and where the disc has in a second sector of the disc, opposite to said first sector, a curving slot which surrounds in the center of said disc, a bearing pin perpendicular to the upper side of the disc, and grooves located on the rims of the disc.

12. The lever of claim 11, wherein the curving slot runs from the perimeter of said disc to the center thereof.

13. The lever of claim 11, wherein the curving slot has grooves on the edges of said curving slot.

14. The lever of claim 11, wherein the bearing pivot is situated on the side diametrically opposite the point on the perimeter of the disc where the curving slot starts.

15. A method for the connection of electrical devices, to be connected between electrical distribution systems and the electrical devices to be powered by said electrical distribution systems, whereby said method comprises a first step which corresponds to a test position in which the electrical device is connected through second means of connection to output and control cables which in turn are connected to the electrical device to be powered by the electrical distribution system and a second step which corresponds to the connection of the electrical device to the electrical distribution system through first means of connection, said method being characterised in that in the first step said second means of electrical connection are displaced longitudinally by a first circular movement of a lever means and in the second step the first means of electrical connection are displaced longitudinally by a second circular movement of said lever means maintaining the second means of electrical connection fixed.
